# EUROPEAN PATENT APPLICATION

(11) **EP 4 782 897 A1**
(43) Date of publication of application: **29.07.2026**
(21) Application number: 24878724.4
(22) Date of filing: 04.09.2024
(51) Int. Cl.: G02B 6/42

(54) **OPTICAL COMMUNICATION ASSEMBLY, OPTICAL COMMUNICATION DEVICE, AND OPTICAL COMMUNICATION SYSTEM**

(30) Priority: 17.10.2023 CN 202311350499
(71) Applicant: HUAWEI TECHNOLOGIES CO., LTD., Shenzhen 518129 (CN)
(72) Inventor: QIU, Botong, Shenzhen, Guangdong 518129 (CN); LIU, Yanzhong, Shenzhen, Guangdong 518129 (CN); SONG, Xiaolu, Shenzhen, Guangdong 518129 (CN)
(74) Representative: Gill Jennings & Every LLP
(86) International application number: PCT/CN2024/116754
(87) International publication number: WO 2025/082074

(57) **Abstract**

Embodiments of this application disclose an optical communication assembly, which is used in the field of optical communication and the field of optical fiber communication. The optical communication assembly includes an optical transmitter and a first pigtail. The optical transmitter is connected to the first pigtail. The first pigtail is connected to a first optical fiber via a first optical connector. The first pigtail is a plastic optical fiber. The first optical fiber is a glass optical fiber. The optical transmitter is configured to: generate a first optical signal, and transmit the first optical signal to another optical communication assembly through the first pigtail and the first optical fiber. The plastic optical fiber and the glass optical fiber are combined for use, to reduce noise, and implement low-cost and high-quality optical communication.

## Description

This application claims priority to Chinese Patent Application No. 202311350499.4, filed with the China National Intellectual Property Administration on October 17, 2023 and entitled "OPTICAL COMMUNICATION ASSEMBLY, OPTICAL COMMUNICATION DEVICE, AND OPTICAL COMMUNICATION SYSTEM", which is incorporated herein by reference in its entirety.

### TECHNICAL FIELD

This application relates to the field of optical communication, and in particular, to an optical communication assembly, an optical communication device, and an optical communication system in the field of optical fiber communication.

### BACKGROUND

An optical communication system in the present invention includes an optical transmitting machine and an optical receiving machine that are connected through an optical fiber. The optical transmitting machine is configured to: generate an optical signal based on an electrical signal, and transmit the optical signal to the optical receiving machine through the optical fiber. The optical receiving machine is configured to convert an optical signal into an electrical signal. There are many types of noise in the optical communication system, for example, relative intensity noise of a light source, mode hopping noise, and multipath interference noise. The noise affects optical communication quality. Therefore, how to reduce the noise of the optical communication system is an urgent problem to be resolved.

### SUMMARY

This application provides an optical communication assembly, an optical communication device, and an optical communication system. A plastic optical fiber and a glass optical fiber are combined for use, to reduce noise and implement low-cost and high-quality optical communication.

According to a first aspect, this application provides an optical communication assembly. The optical communication assembly includes an optical transmitter and a first pigtail. The optical transmitter is connected to the first pigtail. The first pigtail is connected to a first optical fiber via a first optical connector. The first pigtail is a plastic optical fiber. The first optical fiber is a glass optical fiber. The optical transmitter is configured to: generate a first optical signal, and transmit the first optical signal to another optical communication assembly through the first pigtail and the first optical fiber.

In an optional manner of the first aspect, a length of the first optical fiber is greater than or equal to 2 meters. A bandwidth-distance product of the plastic optical fiber is generally smaller than that of the glass optical fiber, and a loss of the plastic optical fiber is greater than that of the glass optical fiber. For example, costs of a perfluorinated plastic optical fiber are far greater than that of the glass optical fiber. When the optical communication assembly is far away from the another optical communication assembly, the glass optical fiber is used as the first optical fiber, to increase optical fiber bandwidth, control a loss, and reduce costs.

In an optional manner of the first aspect, a ratio of a core diameter of the first pigtail to a core diameter of the first optical fiber ranges between 1/3 and 3. A large ratio difference between core diameters of two optical fibers causes a large optical coupling loss. Therefore, in this application, the optical coupling loss can be reduced, to increase a transmission distance of optical communication and improve optical communication performance.

In an optional manner of the first aspect, a length of the first pigtail ranges between 10 millimeters and 5,000 millimeters. A length of the plastic optical fiber is generally positively correlated with noise reduction performance. However, an excessively long plastic optical fiber also causes an excessive loss and excessive dispersion. Therefore, in this application, communication quality of an optical communication system can be improved while the loss and the dispersion are reduced.

In an optional manner of the first aspect, a distance between the optical transmitter and the first optical connector is less than the length of the first pigtail. Noise reduction performance of a plastic optical fiber per unit length can be enhanced through bending. Due to a large loss and large dispersion of the plastic optical fiber, in this application, the first pigtail is arranged in a bent manner, to reduce the length of the first pigtail. In addition, in this application, to reduce noise, space for placing the first pigtail is limited. The first pigtail is arranged in a bent manner, so that a system volume can be reduced while the noise is reduced.

In an optional manner of the first aspect, the first pigtail includes an N-turn coil. N is greater than or equal to 1. In actual application, N may be a number less than 1, for example, 0.5. In this application, to enhance, through bending, the noise reduction performance of the plastic optical fiber per unit length, and arrange the first pigtail of a required length in the limited space, N is a number greater than or equal to 1. The length of the plastic optical fiber is positively correlated with the noise reduction performance. Therefore, in this application, the noise can be further reduced, to improve communication quality.

In an optional manner of the first aspect, a value of N ranges from 1 to 50. In actual application, an excessively long plastic optical fiber increases a transmission loss, increases dispersion, and reduces optical fiber channel bandwidth, and the excessively long plastic optical fiber increases costs of the optical communication system. Therefore, in this application, performance of the optical communication system can be improved and the costs can be reduced while the loss and the dispersion are reduced.

In an optional manner of the first aspect, a radius of the coil ranges between 0.5 millimeters and 200 millimeters. An excessively small radius causes an excessive optical loss of a bent fiber, while an excessively large radius causes the first pigtail to occupy excessive space. Therefore, in this application, the optical loss can be reduced while space utilization is improved.

In an optional manner of the first aspect, a type of the first pigtail is graded-index fiber (Graded-Index Fiber, GI). In a case of a same length, noise reduction effect of a GI-type plastic optical fiber is greater than that of a plastic optical fiber of a step-index fiber (Step-Index Fiber, SI) type. Therefore, in this application, the noise can be further reduced, to improve the communication quality.

In an optional manner of the first aspect, the optical communication assembly further includes a second pigtail and an optical receiver. The optical receiver is connected to the second pigtail. The second pigtail is connected to a second optical fiber via the first optical connector. The second pigtail is a plastic optical fiber. The second optical fiber is a glass optical fiber. The optical receiver is configured to: receive a second optical signal from the another optical communication assembly through the second pigtail and the second optical fiber, and convert the second optical signal into an electrical signal.

In an optional manner of the first aspect, the optical communication assembly further includes a beam splitter and an optical receiver. The optical receiver is configured to: receive a second optical signal from the another optical communication assembly through the first optical fiber, the first pigtail, and the beam splitter, and convert the second optical signal into an electrical signal. A wavelength of the second optical signal is different from a wavelength of the first optical signal.

According to a second aspect, this application provides an optical communication device. The optical communication device includes a processor and the optical communication assembly according to any one of the first aspect or the optional manners of the first aspect. The processor is configured to transmit a to-be-modulated signal to the optical communication assembly. The optical communication assembly is configured to obtain a first optical signal based on the to-be-modulated signal.

According to a third aspect, this application provides an optical communication system. The optical communication system includes the optical communication device according to the second aspect and another optical communication device. The optical communication device is connected to the another optical communication device through a first optical fiber. The first optical fiber is a glass optical fiber. The optical communication device is configured to transmit a first optical signal to the another optical communication device. The another optical communication device includes another processor and another optical communication assembly.

According to a fourth aspect, this application provides an optical communication system. The optical communication system includes an optical communication assembly, a first optical fiber, and another optical communication assembly. The optical communication assembly includes an optical transmitter and a first pigtail. The first pigtail is connected to the first optical fiber via a first optical connector. The first pigtail is a plastic optical fiber. The first optical fiber is a glass optical fiber. The optical transmitter is configured to: generate a first optical signal, and transmit the first optical signal to the another optical communication assembly through the first pigtail and the first optical fiber.

It should be understood that descriptions of the fourth aspect are similar to that of the optical communication assembly according to any one of the first aspect or the optional manners of the first aspect. Therefore, for the descriptions of the fourth aspect, refer to the optical communication assembly according to any one of the first aspect or the optional manners of the first aspect. For example, a length of the first optical fiber is greater than or equal to 2 meters. For another example, a length of the first pigtail ranges between 10 millimeters and 5,000 millimeters.

### BRIEF DESCRIPTION OF DRAWINGS

FIG. 1 is a diagram of a first structure of an optical communication system according to an embodiment of this application;
FIG. 2 is a diagram of a second structure of an optical communication system according to an embodiment of this application;
FIG. 3 is a diagram of a third structure of an optical communication system according to an embodiment of this application;
FIG. 4 is a diagram of a first structure of an optical communication assembly according to an embodiment of this application;
FIG. 5 is a diagram of a second structure of an optical communication assembly according to an embodiment of this application;
FIG. 6 is a diagram of a third structure of an optical communication assembly according to an embodiment of this application;
FIG. 7 is a diagram of a first structure of an optical communication device according to an embodiment of this application;
FIG. 8 is a diagram of a second structure of an optical communication device according to an embodiment of this application; and
FIG. 9 is a diagram of a fourth structure of an optical communication system according to an embodiment of this application.

### DESCRIPTION OF EMBODIMENTS

This application provides an optical communication assembly, an optical communication device, and an optical communication system. A plastic optical fiber and a glass optical fiber are combined for use, to reduce noise and implement low-cost and high-quality optical communication. It should be understood that "first", "second", and the like used in this application are merely for distinguishing and description, but cannot be understood as an indication or implication of relative importance or an indication or implication of a sequence. In addition, for brevity and clarity, reference numbers and/or letters are repeated in a plurality of accompanying drawings of this application. Repetition is not indicative of a strict limiting relationship between various embodiments and/or configurations.

The optical communication system provided in this application is used in the field of optical communication. In the field of optical communication, optical communication can be performed between an optical transmitting machine and an optical receiving machine through an optical fiber. Many factors in the optical communication system can affect noise, for example, an optical fiber connector, bending of an optical fiber, jitter of an optical fiber, and interface reflection of an optical fiber. The noise affects optical communication quality. Therefore, how to reduce the noise of the optical communication system is an urgent problem to be resolved.

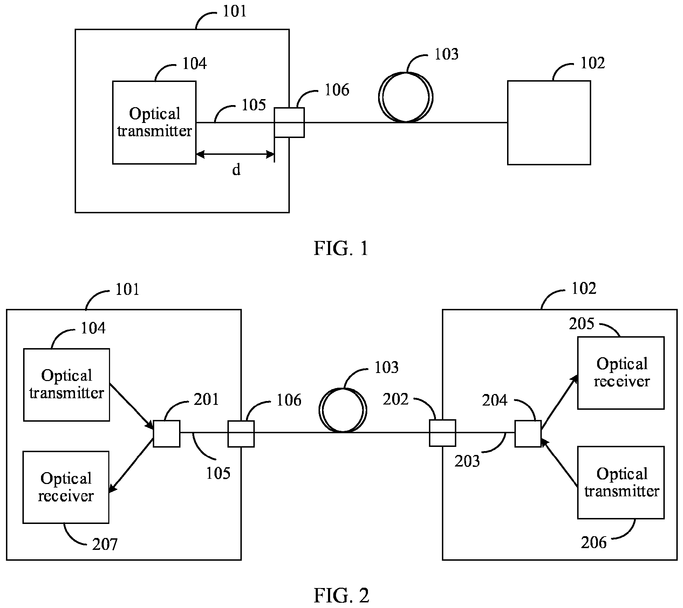

In view of this, this application provides an optical communication system. FIG. 1 is a diagram of a first structure of an optical communication system according to an embodiment of this application. As shown in FIG. 1, the optical communication system includes an optical communication assembly 101 and another optical communication assembly 102. The optical communication assembly 101 is connected to the another optical communication assembly 102 through a first optical fiber 103. The optical communication assembly 101 includes an optical transmitter 104 and a first pigtail 105. The optical transmitter 104 is connected to the first pigtail 105. The first pigtail 105 is connected to the first optical fiber 103 via a first optical connector 106. The first pigtail 105 is a plastic optical fiber. The first optical fiber 103 is a glass optical fiber. The optical transmitter 104 may also be referred to as an optical transmit module or an optical transmitting machine. The optical communication assembly 101 may also be referred to as an optical transmit module or optical transmitting machine with a pigtail. The optical transmitter 104 is configured to: generate a first optical signal, and transmit the first optical signal to the another optical communication assembly 102 through the first pigtail 105 and the first optical fiber 103.

In this application, a plastic optical fiber is used as a pigtail to be coupled with an optical transmitter, to reduce noise that affects the optical communication quality, such as relative intensity noise of a light source, mode hopping noise, and multipath interference noise. Therefore, in this application, communication quality can be improved. In addition, a bandwidth-distance product of the plastic optical fiber is generally smaller than that of the glass optical fiber, and a loss of the plastic optical fiber is greater than that of the glass optical fiber. Costs of a perfluorinated plastic optical fiber that has better performance than another plastic optical fiber are far greater than that of the glass optical fiber. To increase optical fiber bandwidth, control a loss, and reduce costs, the first optical fiber 103 is a glass optical fiber. A length of the first optical fiber 103 can be greater than or equal to 2 meters.

In this embodiment of this application, to improve noise reduction performance, a first pigtail of a specific length is needed, and noise reduction performance of a plastic optical fiber per unit length can be enhanced through bending. Due to a large loss and large dispersion of the plastic optical fiber, in this application, the first pigtail is arranged in a bent manner, to reduce a length of the first pigtail. In the optical communication assembly 101, space for placing the first pigtail 105 is limited. In other words, a distance between the optical transmitter 104 and the first optical connector 106 is limited. To improve space utilization, the first pigtail 105 can be arranged in a bent manner in this embodiment of this application. In this case, the distance between the optical transmitter 104 and the first optical connector 106 is less than the length of the first pigtail 105. For example, in an example of FIG. 1, the distance between the optical transmitter 104 and the first optical connector 106 is d. d is less than the length of the first pigtail 105.

It may be learned from the foregoing descriptions that the first pigtail 105 can be arranged in a bent manner to improve the space utilization. Therefore, in actual application, the first pigtail 105 can be bent into an N-turn coil. In addition, because a length of the plastic optical fiber is positively correlated with the noise reduction performance, to improve the noise reduction performance, N can be a value greater than or equal to 1. It should be understood that N can be a non-integer, for example, 0.5 or 1.7. It may be learned from the foregoing descriptions that an excessively long plastic optical fiber increases a transmission loss and increases dispersion, and consequently, optical fiber channel bandwidth is reduced. In addition, costs of a perfluorinated plastic optical fiber with better performance are high. To improve performance of the optical communication system and reduce costs while reducing the noise, the value of N can be less than 50. In this case, the value of N ranges from 1 to 50.

In actual application, the length of the plastic optical fiber is positively correlated with the noise reduction performance. To improve the noise reduction performance, the length of the first pigtail 105 may be greater than 10 millimeters. However, an excessively long plastic optical fiber also causes an excessive loss and excessive dispersion. Therefore, to improve communication quality of the optical communication system while reducing the loss and the dispersion, the length of the first pigtail 105 can be less than 5,000 millimeters. The first pigtail 105 can include the N-turn coil and a straight-line part. In this case, the length H of the first pigtail 105 can be calculated according to the following formula: H=L+N×2πr. r is a radius of the coil. L is a length of the straight-line part of the first pigtail 105. When the length of the first pigtail 105 ranges between 10 millimeters and 5,000 millimeters, the value of N can range from 1 to 50, and the radius of the coil can range between 0.5 millimeters and 200 millimeters. For example, π is equal to 3.14, and when r is equal to 100 millimeters, N is equal to 6, and L is equal to 323 millimeters, the length of the first pigtail 105 is equal to 4,000 millimeters. For another example, when r is equal to 10 millimeters, N is equal to 10, and L is equal to 22 millimeters, the length of the first pigtail 105 is equal to 650 millimeters.

Types of the first pigtail 105 include GI and SI. In a case of a same length, noise reduction performance of a GI-type plastic optical fiber is greater than noise reduction performance of a SI-type plastic optical fiber. To further reduce the noise, in this embodiment of this application, the GI-type plastic optical fiber may be used as the first pigtail 105.

In embodiments of this application, the plastic optical fiber and the glass optical fiber are combined for use, to reduce costs of the optical communication system while reducing the noise. A difference between a core diameter of the plastic optical fiber and that of the glass optical fiber may be large, and the large difference between the core diameters causes a large optical loss. To reduce the optical loss, a plastic optical fiber and a glass optical fiber with similar core diameters can be used in embodiments of this application. For example, a ratio of a core diameter of the first pigtail 105 to a core diameter of the first optical fiber 103 ranges between 1/3 and 3. "1/3" means one third. For another example, the ratio of the core diameter of the first pigtail 105 to the core diameter of the first optical fiber 103 is 2. However, in actual application, the core diameter of the plastic optical fiber is generally far greater than the core diameter of the glass optical fiber. To reduce the difference between the core diameters, the core diameter of the plastic optical fiber may need to be reduced or the core diameter of the glass optical fiber may need to be increased. As a result, additional manufacturing costs are introduced. Therefore, in actual application, to reduce optical fiber manufacturing costs, the ratio of the core diameter of the first pigtail 105 to the core diameter of the first optical fiber 103 can be greater than or equal to 3.

The optical communication system provided in embodiments of this application can be used in a single-fiber bidirectional communication system and a dual-fiber bidirectional communication system. Descriptions are separately provided below.

FIG. 2 is a diagram of a second structure of an optical communication system according to an embodiment of this application. As shown in FIG. 2, based on FIG. 1, the optical communication assembly 101 further includes a beam splitter 201 and an optical receiver 207. The another optical communication assembly 102 includes a second optical connector 202, a third pigtail 203, a beam splitter 204, an optical receiver 205, and an optical transmitter 206. The second optical connector 202 is configured to connect the first optical fiber 103 and the third pigtail 203. The optical receiver 205 is configured to: receive the first optical signal from the optical communication assembly 101, and convert the first optical signal into an electrical signal. The optical transmitter 206 is configured to transmit a second optical signal to the optical communication assembly 101. The beam splitter 201 and the beam splitter 204 are configured to separate the first optical signal from the second optical signal. A wavelength of the second optical signal is different from a wavelength of the first optical signal. The optical receiver 207 is configured to: receive the second optical signal from the another optical communication assembly 102, and convert the second optical signal into an electrical signal. The optical receiver 207 may also be referred to as an optical receiving module or an optical receiving machine. It should be understood that, in actual application, the optical receiver 207 and the optical transmitter 104 can be integrated on one board. The board obtained through integration may also be referred to as an optical module, an optical transceiver module, or an optical transceiver. In this case, the optical communication assembly 101 may also be referred to as an optical module, optical transceiver module, or optical transceiver with a pigtail.

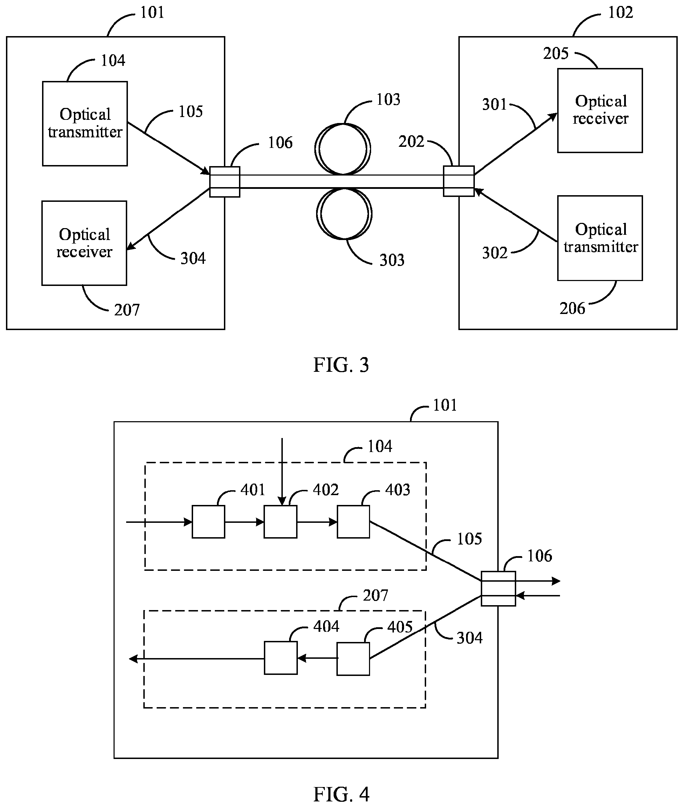

FIG. 3 is a diagram of a third structure of an optical communication system according to an embodiment of this application. As shown in FIG. 3, based on FIG. 1, the optical communication assembly 101 further includes a second pigtail 304 and an optical receiver 207. The another optical communication assembly 102 includes a second optical connector 202, a second pigtail 301, an optical receiver 205, an optical transmitter 206, and a fourth pigtail 302. The second optical connector 202 is configured to connect the first optical fiber 103 and the pigtail 301. The optical receiver 205 is configured to: receive the first optical signal from the optical communication assembly 101 through the first optical fiber 103 and the third pigtail 301, and convert the first optical signal into an electrical signal. The second optical connector 202 is further configured to connect a second optical fiber 303 and the fourth pigtail 302. The optical transmitter 206 is configured to transmit a second optical signal to the optical communication assembly 101 through the second optical fiber 303 and the fourth pigtail 302. A wavelength of the first optical signal may be the same as or different from a wavelength of the second optical signal. The first optical connector 106 is further configured to connect the second optical fiber 303 and the second pigtail 304. The optical receiver 207 is configured to: receive the second optical signal from the another optical communication assembly 102 through the second optical fiber 303 and the second pigtail 304, and convert the second optical signal into an electrical signal.

The following uses the optical communication system in FIG. 3 as an example to describe an example of a structure of the optical communication assembly 101. FIG. 4 is a diagram of a first structure of an optical communication assembly according to an embodiment of this application. As shown in FIG. 4, in the optical communication assembly 101, the optical transmitter 104 includes a power amplifier 401, a bias-tee 402, and a laser 403. The power amplifier 401 is configured to: receive an analog electrical signal, amplify the analog electrical signal, and transmit the amplified analog electrical signal to the bias-tee 402. The bias-tee 402 is configured to superimpose a direct current power supply and an analog electrical signal to obtain a superposed electrical signal. The bias-tee 402 is further configured to transfer the superimposed electrical signal to the laser. The laser 403 is configured to: receive the superimposed electrical signal from the bias-tee 402 and generate a first optical signal based on the superimposed electrical signal. The optical receiver 207 includes a photodetector-transimpedance amplifier 405 and a power amplifier 404. The photodetector-transimpedance amplifier 405 is configured to: convert a second optical signal into an analog electrical signal, and transmit the analog electrical signal to the power amplifier 404. The power amplifier 404 is configured to: perform power amplification on the analog electrical signal, and output the amplified analog electrical signal.

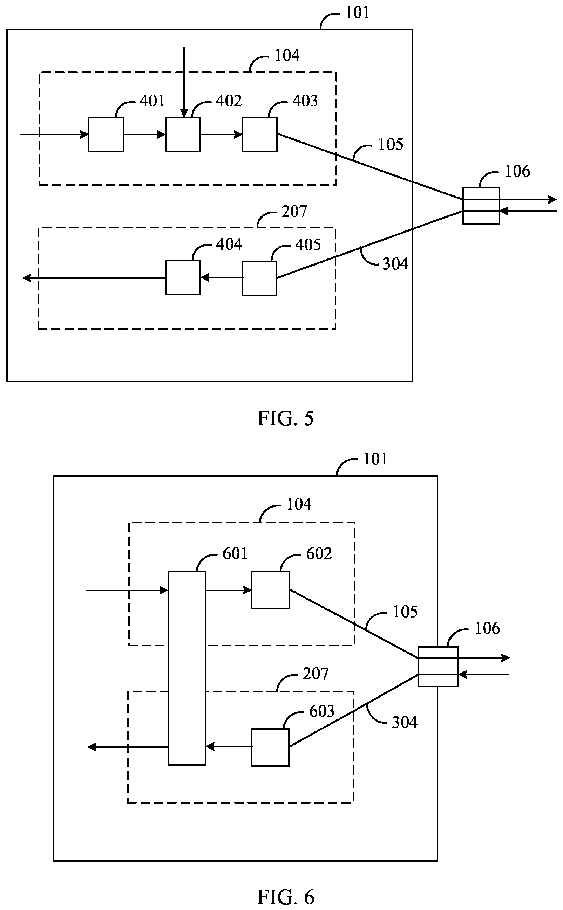

It should be understood that FIG. 4 is merely an example of the optical communication assembly 101 according to this embodiment of this application. A person skilled in the art can adaptively modify the optical communication assembly 101 based on a requirement. For example, in actual application, the optical communication assembly 101 may further include a digital-to-analog converter and an analog-to-digital converter. The digital-to-analog converter is configured to: receive a digital electrical signal, convert the digital electrical signal into an analog electrical signal, and transmit the analog electrical signal to the power amplifier 401. The digital-to-analog converter is configured to convert the analog electrical signal output by the power amplifier 404 into a digital electrical signal. For another example, the optical communication assembly 101 does not include the second pigtail 304. The optical receiver 207 is directly connected to the second optical fiber 303. The another optical communication assembly 102 does not include the third pigtail 301. The optical receiver 205 is directly connected to the first optical fiber 103. For another example, the first optical connector 106 includes two independent parts: a connector 1 and a connector 2. The connector 1 is configured to connect the first optical fiber 103 and the first pigtail 105. The connector 2 is configured to connect the second optical fiber 303 and the second pigtail 304. In the example in FIG. 4, the optical communication assembly 101 includes the first optical connector 106. In actual application, the first optical connector 106 can be located outside the optical communication assembly 101. FIG. 5 is a diagram of a second structure of an optical communication assembly according to an embodiment of this application. As shown in FIG. 5, based on FIG. 4, the first optical connector 106 is located outside the optical communication assembly 101. In this case, the optical communication assembly 101 does not include the first optical connector 106.

FIG. 6 is a diagram of a third structure of an optical communication assembly according to an embodiment of this application. As shown in FIG. 6, in the optical communication assembly 101, the optical transmitter 104 includes an optoelectronic physical layer chip 601 and a laser 602. The optoelectronic physical layer chip 601 can include functions such as digital signal processing, light source driving, and limiting amplification. The optoelectronic physical layer chip 601 is configured to: receive a digital electrical signal, perform corresponding processing on the digital electrical signal, and drive the laser 602 to perform optical-electrical conversion to obtain a first optical signal. The optoelectronic physical layer chip 601 may alternatively be split into two or more electrical chips to implement functions of the optoelectronic physical layer chip 601. For example, the optoelectronic physical layer chip 601 can be split into a digital signal processing chip integrated with functions such as receive end limiting amplification, and a light source driving chip. The optical receiver 207 includes the optoelectronic physical layer chip 601 and a photodetector-transimpedance amplifier 603. The photodetector-transimpedance amplifier 603 is configured to: convert a second optical signal into an electrical signal, perform direct current blocking and transimpedance amplification, and transmit the electrical signal to the optoelectronic physical layer chip 601. The optoelectronic physical layer chip 601 performs limiting amplification on the received electrical signal, and outputs the amplified electrical signal. In actual application, a receive end limiting amplification function of the optoelectronic physical layer chip 601 can alternatively be integrated into the photodetector-transimpedance amplifier 603.

It should be understood that, in actual application, a structure of the another optical communication assembly 102 is similar to the structure of the optical communication assembly 101. Therefore, for descriptions of the structure of the another optical communication assembly 102, refer to the descriptions of the optical communication assembly 101.

The following uses the optical communication assembly 101 in FIG. 3 as an example to describe an optical communication device provided in this application. The optical communication device described in this application may be a fiber-to-the-room (Fiber to the Room, FTTR) device, an optical radio unit (Optical Radio Unit, ORU) of a campus network, an access point (Access Point, AP), a pico remote radio unit (pico Remote Radio Unit, pRRU) in wireless network small cell/pole site backhaul, a radio HUB (Radio HUB, RHUB), a server or switch in a data center, or the like. The FTTR device can be a primary FTTR device or a secondary FTTR device. The AP can be a distributed AP. The switch may be a top-of-the-rack (Top of the Rack, TOR) switch or a Spine switch.

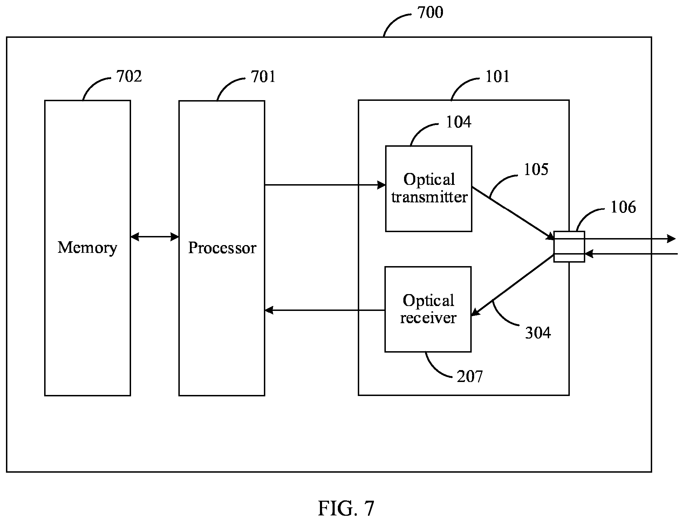

FIG. 7 is a diagram of a first structure of an optical communication device according to an embodiment of this application. As shown in FIG. 7, the optical communication device 700 includes a processor 701 and the optical communication assembly 101. The processor 701 may be a central processing unit (central processing unit, CPU), a network processor (network processor, NP), a graphics processing unit, or a combination of a CPU and an NP. The processor 701 may further include a hardware chip or another general-purpose processor. The foregoing hardware chip may be an application-specific integrated circuit (application-specific integrated circuit, ASIC), a programmable logic device (programmable logic device, PLD), or a combination thereof. The processor 701 is configured to transmit a digital electrical signal to the optical communication assembly 101. The digital electrical signal may also be referred to as a to-be-modulated signal. The optical communication assembly 101 is configured to: obtain a first optical signal based on the to-be-modulated signal, and output the first optical signal. The optical communication assembly 101 can be further configured to: receive a second optical signal, convert the second optical signal into a digital electrical signal, and transmit the digital electrical signal to the processor 701.

In another embodiment, the optical communication device 700 may further include a memory 702. The memory 702 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory 702 may be configured to store the digital electrical signal.

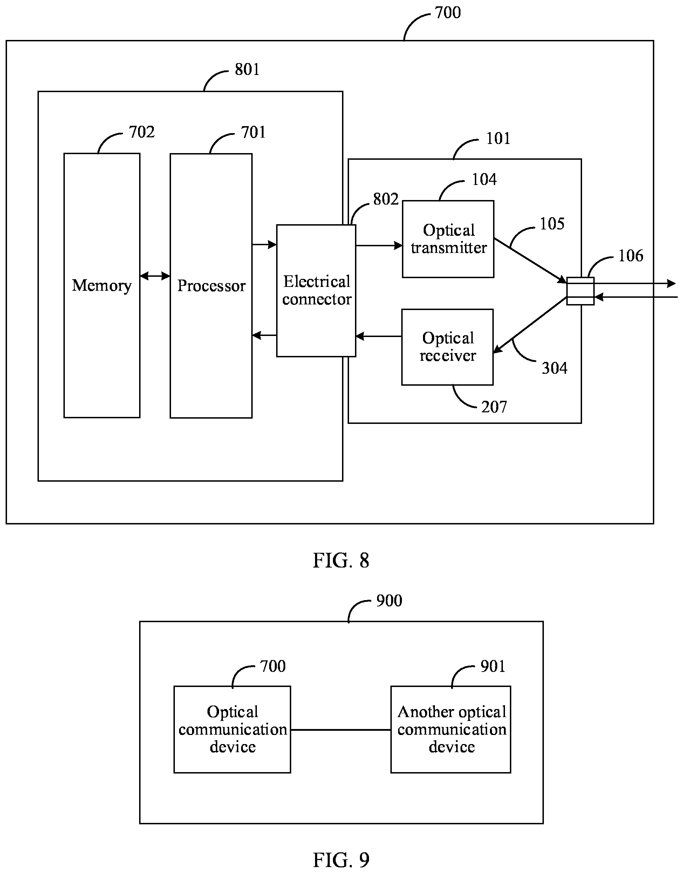

FIG. 8 is a diagram of a second structure of an optical communication device according to an embodiment of this application. As shown in FIG. 8, based on FIG. 7, the optical communication device 700 includes the optical communication assembly 101 and a first assembly 801. The first assembly 801 includes the processor 701 and the memory 702. The optical communication assembly 101 further includes an electrical connector 802. The optical communication assembly 101 can be connected to the first assembly 801 in a pluggable form via the electrical connector 802. For example, the electrical connector 802 is an edge connector.

FIG. 9 is a diagram of a fourth structure of an optical communication system according to an embodiment of this application. As shown in FIG. 9, the optical communication system 900 includes the optical communication device 700 and another optical communication device 901. The optical communication device 700 is configured to transmit a first optical signal to the another optical communication device 901. For descriptions of the optical communication device 700, refer to the descriptions in FIG. 7 or FIG. 8. For descriptions of the another optical communication device 901, refer to the descriptions of the another optical communication assembly 102 in FIG. 1 to FIG. 3. The another optical communication device 901 can include the another optical communication assembly 102.

The foregoing descriptions are merely specific implementations of this application, but are not intended to limit a protection scope of this application. Any variation or replacement readily figured out by a person skilled in the art within the technical scope disclosed in this application shall fall within the protection scope of this application.

## Claims

1. An optical communication assembly, comprising an optical transmitter and a first pigtail, wherein
the optical transmitter is connected to the first pigtail, the first pigtail is connected to a first optical fiber via a first optical connector, the first pigtail is a plastic optical fiber, and the first optical fiber is a glass optical fiber; and
the optical transmitter is configured to: generate a first optical signal, and transmit the first optical signal to another optical communication assembly through the first pigtail and the first optical fiber.

2. The optical communication assembly according to claim 1, wherein a length of the first optical fiber is greater than or equal to 2 meters.

3. The optical communication assembly according to claim 1 or 2, wherein a ratio of a core diameter of the first pigtail to a core diameter of the first optical fiber ranges between 1/3 and 3.

4. The optical communication assembly according to any one of claims 1 to 3, wherein a length of the first pigtail ranges between 10 millimeters and 5,000 millimeters.

5. The optical communication assembly according to any one of claims 1 to 4, wherein a distance between the optical transmitter and the first optical connector is less than the length of the first pigtail.

6. The optical communication assembly according to claim 5, wherein the first pigtail comprises an N-turn coil, and N is greater than or equal to 1.

7. The optical communication assembly according to claim 6, wherein a value of N ranges from 1 to 50.

8. The optical communication assembly according to claim 5 or 6, wherein a radius of the coil ranges between 0.5 millimeters and 200 millimeters.

9. The optical communication assembly according to any one of claims 1 to 8, wherein a type of the first pigtail is Graded-Index Fiber.

10. The optical communication assembly according to any one of claims 1 to 9, wherein the optical communication assembly further comprises a second pigtail and an optical receiver, wherein
the optical receiver is connected to the second pigtail, the second pigtail is connected to a second optical fiber via the first optical connector, the second pigtail is a plastic optical fiber, and the second optical fiber is a glass optical fiber; and
the optical receiver is configured to: receive a second optical signal from the another optical communication assembly through the second pigtail and the second optical fiber, and convert the second optical signal into an electrical signal.

11. The optical communication assembly according to any one of claims 1 to 9, wherein the optical communication assembly further comprises a beam splitter and an optical receiver, wherein
the optical receiver is configured to: receive a second optical signal from the another optical communication assembly through the first optical fiber, the first pigtail, and the beam splitter, and convert the second optical signal into an electrical signal, wherein a wavelength of the second optical signal is different from a wavelength of the first optical signal.

12. An optical communication device, comprising a processor and the optical communication assembly according to any one of claims 1 to 11, wherein
the processor is configured to transmit a to-be-modulated signal to the optical communication assembly, and the optical communication assembly is configured to obtain a first optical signal based on the to-be-modulated signal.

13. An optical communication system, comprising the optical communication device according to claim 12, and another optical communication device, wherein the optical communication device is connected to the another optical communication device through a first optical fiber, and the optical communication device is configured to transmit a first optical signal to the another optical communication device.
